# NEW EUROPEAN PATENT SPECIFICATION

(11) **EP 2 003 333 B2**
(45) Date of publication and mention of the opposition decision: **13.02.2019**
(45) Mention of the grant of the patent: 13.01.2016
(21) Application number: 07011831.0
(22) Date of filing: 15.06.2007
(51) Int. Cl.: F03D 1/00, B66C 1/10

(54) **Method for mounting of at least two components of a wind turbine and use of a handling device**
Verfahren zur Montage von mindestens zwei Komponenten einer Windturbine und Verwendung einer Handhabungsvorrichtung
Procédé de montage de (au moins) deux composants d'une éolienne et utilisation d'un dispositif de manipulation

(43) Date of publication of application: 17.12.2008
(73) Proprietor: Siemens Aktiengesellschaft, 80333 München (DE)
(72) Inventor: Kessler, Michael, 8700 Horsens (DK)

(56) References cited:
- WO-A-96/05391
- WO-A-2006/101632
- DE-A1- 10 212 305
- DE-A1- 19 909 698
- DE-U1- 20 109 835
- US-A1- 2004 217 037
- ANONYMOUS: "Port of Longview handles Siemens Wind Turbines" PORT OF LONGVIEW PRESS RELEASE, [Online] 26 March 2007 (2007-03-26), XP002462048 Retrieved from the Internet: URL:http://www.portoflongview.com/page.asp ?view=4322> [retrieved on 2007-12-07]
- SHERRY BLANCHE: "WIND FARM"[Online] 2002, XP002470497 Retrieved from the Internet: URL:http://www.ci.kimball.ne.us/econdev/wi nd_farm.htm> [retrieved on 2004-12-16]

## Description

The invention relates to a method for mounting of at least two components of a wind turbine with each other. The invention concerns also the use of a handling device for mounting of at least two components of a wind turbine.

A wind turbine comprises several components like a tower, a nacelle, a generator, a rotor comprising a hub and rotor blades and so on. To build up the wind turbine these partially very heavy components must be mounted with each other. When mounted on land normally mobile cranes are used to position, orient and arrange the components relatively to each other that the components are able to be mounted together.

Such a mobile crane as a rule comprising a boom is e.g. used to position and orient a rotor blade relatively to a hub. From the crane boom end a wire hangs down to which a yoke is attached. From each end of the yoke further wires hang down which are arranged around the rotor blade and carry the rotor blade. The positioning and the orientation of the rotor blade relatively to the hub as well as the mounting of the rotor blade on the hub is then done by moving the rotor blade and by moving the crane boom wherein normally several people guide and control the movements of the rotor blade by manually pulling on ropes mounted to the rotor blade. Bolts on the rotor blade end facing the hub are in this way slided through corresponding bolt holes of the hub and screwed with nuts.

This mounting of a rotor blade on a hub of a wind turbine is difficult to do in a smooth and an easy way especially under the influence of wind. The described arrangement comprising the mobile crane and the rotor blade is namely very susceptible to wind because of the relatively large working surface of the rotor blade and the one point attachment of the wire carrying the yoke. Additionally the rotor blade is relatively large especially for large wind turbines and therefore difficult to handle.

In DE 201 09 835 U1 a working platform attached to a crane is disclosed. A rotor blade of a wind turbine can be arranged on the working platform and transported to a hub of an erected wind turbine for mounting the rotor blade to the hub.

It is an object of the present invention to provide a method as initially mentioned in such a way, that the mounting or assembling of components of a wind turbine is simplified. It is a further object of the invention to indicate the use of an appropriate handling device.

This object is inventively achieved by a method for mounting of at least two components of a wind turbine with each other wherein the first component is first positioned, oriented and/or arranged relatively to the second component by a Reach Stacker and wherein the at least two components are then mounted with each other. Reach Stackers are industrial trucks which are normally used for stacking and transacting containers and swap trailers or even components of a wind turbine e.g. in a harbour (cp. http://www.portoflongview.com/page.asp?view=4322) or outside of a harbour (cp. http://www.ci.kimball.ne.us/econdev/wind_farm.htm). Such Reach Stackers are sold e.g. by the Linde AG, Liebherr, CVS Ferrari and so on. The inventor has discovered that a standard Reach Stacker is in some situations better adapted for mounting of at least two components of a wind turbine with each other than a crane or a mobile crane. Preferably the first component is connected to the Reach Stacker on at least two points afar from each other. Such an at least two point connection leads to a relatively stable arrangement of the first component on the Reach Stacker.

Thus the positioning, the orientation, the arrangement and/or the mounting of the first component relatively to the second component are easier and safer particularly in high wind conditions. Additionally less people are needed during the positioning, the orientation, the arrangement and/or the mounting of the first component relatively to the second component to secure a safe mounting.

According to an embodiment of the invention the first component is a rotor blade of the wind turbine and the second component is a hub of the wind turbine. Preferably the rotor blade is positioned, oriented and/or arranged relatively to the hub by the Reach Stacker.

According to a variant of the invention the Reach Stacker comprises a telescopic arm with a substantially transverse and pivotable boom. The telescopic arm is raisable or adjustable and can normally be tilted. As a rule the telescopic arm and the boom are connected by a swivel joint.

According to another variant of the invention at least two float arms, wires, ropes and/or bands are attached to the boom preferably on positions afar from each other and the rotor blade is arranged in a substantially horizontal orientation on the float arms, wires, ropes and/or bands. Preferably the at least two float arms, wires, ropes and/or bands form in each case a kind of loop or sling wherein the rotor blade rests in the loops or slings in a substantially horizontal orientation. This is one embodiment of the afore mentioned at least two point arrangement of the first component of the wind turbine at the Reach Stacker.

In a further development of the invention the rotor blade is positioned, oriented and/or arranged in such a way relatively to the hub by the Reach Stacker that fastening means of the rotor blade and fastening means of the hub are arranged substantially horizontally oppositely. When according to an embodiment of the invention the boom of the Reach Stacker comprises at least one substantially horizontally adjustable boom element to which the rotor blade is attached by float arms, wires, robes and/or bands, only this at least one boom element must be adjusted substantially horizontally that the fastening means of the rotor blade and the fastening means of the hub interdigitate. Preferably the fastening means of the rotor blades are bolts and the fastening means of the hub are screw or bolt holes. The bolts of the rotor blade are tightened using nuts.

The further object of the invention is inventively achieved by the use of a Reach Stacker for mounting of at least two components of a wind turbine with each other wherein the first component is first positioned, oriented and/or arranged relatively to the second component by the Reach Stacker and wherein the at least two components are then mounted with each other. For this solution the same advantages arise as mentioned above.

The invention will in the following be explained in more detail with reference to the schematic drawings, where
- FIG 1: shows an arrangement with a mobile crane according to the prior art,
- FIG 2: shows a Reach Stacker carrying a rotor blade of a wind turbine and
- FIG 3: shows the arrangement of a rotor blade opposite a hub.

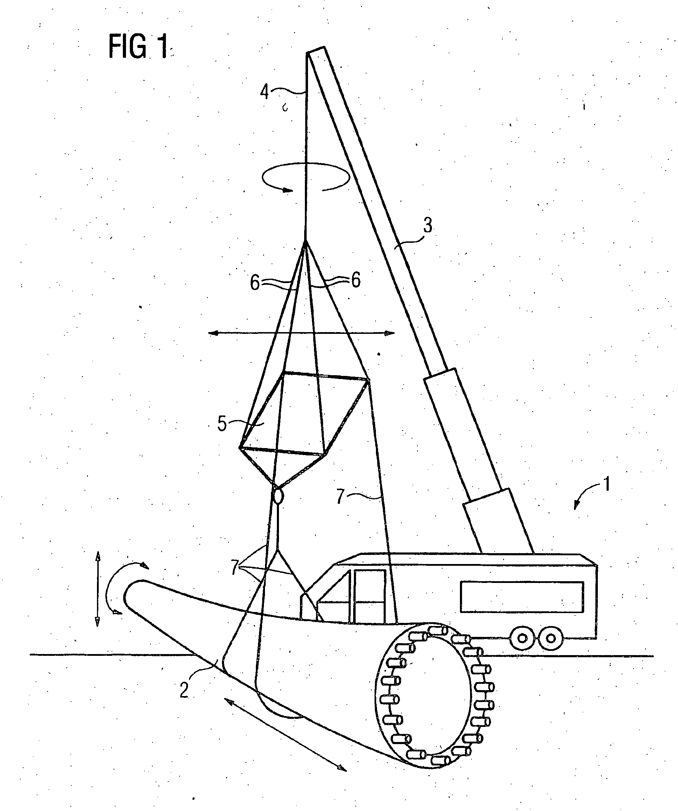

FIG 1 shows an arrangement with a mobile crane 1 for the positioning and the orientation of a rotor blade 2 of a wind turbine relatively to a not shown hub of the wind turbine.

The mobile crane 1 comprises a boom 3. From the crane boom end a wire 4 hangs down to which a yoke 5 is attached by wires 6. From each end of the yoke 5 further wires 7 hang down which are arranged around the rotor blade 2 and which carry the rotor blade 2. The positioning and the orientation of the rotor blade 2 relatively to the hub are done by adjusting the crane boom 3 and by moving the rotor blade 2. As a rule several people are necessary to guide and control the movements of the rotor blade 2 by manually pulling on not shown ropes attached to the rotor blade 2. Because of the one point attachment of the wire 4 carrying the yoke 5 and the relatively large working surface of the rotor blade 2 for wind it is difficult and people-intensive to position and orient the rotor blade 2 relatively to the hub for mounting the rotor blade 2 and the hub together especially in high wind conditions.

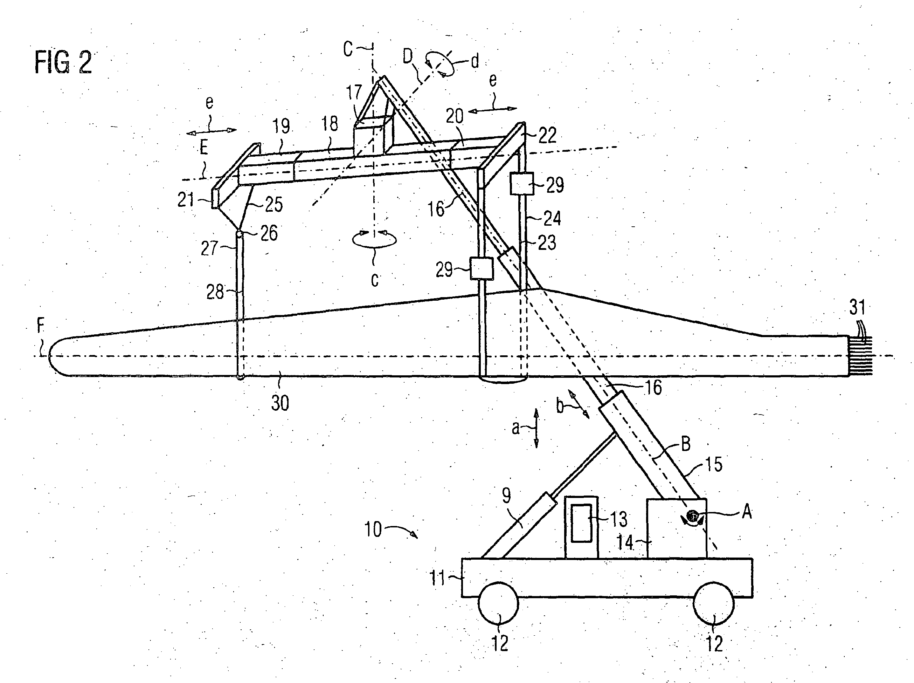

According to the invention it is therefore suggested to use a standard Reach Stacker 10 as schematically shown in FIG 2 for mounting of at least two components of a wind turbine with each other. In case of the present embodiment of the invention the Reach Stacker 10 is used for mounting a rotor blade 30 as a first component of a not at large shown wind turbine and a hub 40 of the wind turbine with each other.

The schematically shown, conventional standard Reach Stacker 10 comprises a carriage 11 with wheels 12, a steeple cab 13 and a support 14 of a telescopic arm 15. The Reach Stacker 10 is able to be driven by a person being located in the steeple cab 13.

The telescopic arm 15 is raisable and comprises adjustable arm elements 16 respectively. Two adjustable hydraulic cylinders 9 are arranged between the carriage 11 and the telescopic arm 15. Thus the telescopic arm 15 is able to be tilted around a shaft A of the support 14. In case of the present embodiment of the invention a schematically shown swivel joint 17 is attached to the free end of the telescopic arm 15. A boom 18 is connected to the swivel joint 17. In case of the present embodiment of the invention the boom 18 is a substantially transverse telescopic boom 18 comprising on both sides adjustable boom elements 19, 20. The boom element 19 comprises a substantially perpendicularly arranged beam 21 and the boom element 20 comprises a substantially perpendicularly arranged beam 22.

The telescopic arm 15 is able to be adjusted vertically (cp. double-headed arrow a) when tilted around the shaft A and adjusted along a shaft B of the telescopic arm 15 (cp. double-headed arrow b). The boom 18 is pivotable around a shaft C of the swivel joint 17 (cp. double-headed arrow c) and swivelling around a shaft D of the swivel joint 17 (cp. double-headed arrow d). The boom elements 19, 20 are adjustable along a shaft E of the boom 18 in the directions of the double-headed arrows e.

In case of the present embodiment of the invention a band 23 is attached to the ends of the beam 22 of the boom element 20 forming a first loop or a first sling 24. To the ends of the beam 21 of the boom element 19 a wire 25 is attached holding a pulley 26. Around the pulley 26 a second band 27 is guided forming a second loop or a second sling 28. The rotor blade 30 is located in the first and the second sling 24, 28. Thus the rotor blade 30 is able to be driven with the Reach Stacker 10 may be from a truck to the location of the hub 40 for mounting the rotor blade 30 and the hub 40 together. Because of the afore mentioned adjustability of the Reach Stacker 10 the rotor blade 30 is able to be easily and respectively positioned, oriented and/or arranged relatively to the hub 40 for mounting.

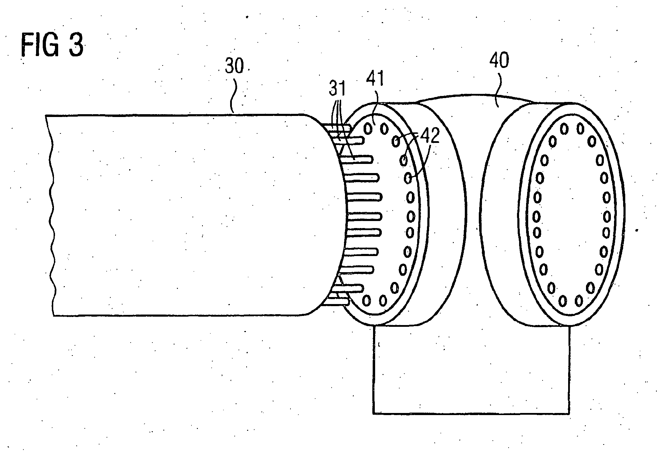

Normally the mounting is done in a substantially horizontal orientation of the rotor blade 30 as schematically shown in FIG 2 and FIG 3. The horizontal orientation of the rotor blade 30 in relation to the longitudinal shaft F of the rotor blade 30 is able to be achieved by swivelling the boom 18 around the shaft D and/or by means of a kind of belt pretensioner 29 as schematically shown in FIG 2. By means of the belt pretensioner 29 it is possible to tighten the band 23 or to diminish the first sling 24 and thus to lift the rotor blade 30 on the side of the band 23 or to extend the band 23 or to enlarge the first sling 24 and thus to lower the rotor blade 30 on the side of the band 23.

In this way the rotor blade 30 is substantially horizontally oriented and preferably exactly positioned such in front of a hub bearing 41 of the hub 40 that fastening means of the rotor blade 30 in form of bolts 31 and fastening means of the hub 40 in form of bolt holes 42 of the hub bearing 41 are arranged oppositely as shown in FIG 3. Thus it is ensured that the bolts 31 of the rotor blade 30 are able to be put through the bolt holes 42 of the hub bearing 41. Then the boom 18 in particular the boom elements 19 and 20 are adjusted substantially horizontally in such a way that the bolts 31 of the rotor blade 30 and the bolt holes42 of the hub bearing 41 interdigitate wherein the bolts 31 are put through the bolts holes 42 and screwed tightened by not shown nuts from the inside of the hub 40. After the mounting of the rotor blade 30 on the hub 40 the rotor blade 30 is released from the Reach Stacker 10 which can grasp a next rotor blade for mounting on the hub 40.

As the Reach Stacker does not have a wire hanging from the end of the telescopic arm to the boom as the mobile crane has it hanging from the crane boom end to the yoke, the mounting of a rotor blade on a hub is done much more safely especially in high wind conditions and less people are needed during the mounting to secure a safe mounting. In addition a Reach Stacker can be used up to a wind speed of 13-15 m/s, whereas a mobile crane normally can only be used with wind speeds below 8 m/s to ensure a safe mounting of the rotor blades. A mobile crane is also much more expensive than a Reach Stacker. The rent of a mobile crane amounts about 25.000 Krones per day in comparison to about 1.500 Krones per day for a Reach Stacker. The handling of the mobile crane is also more time-consuming as it always needs to have support legs put against the ground for stabilisation. The Reach Stacker does not need such support legs which makes it easier to move the Reach Stacker from one to another position.

According to the described embodiment of the invention a rotor blade and a hub were mounted together using a Reach Stacker. But it is also possible to mount other components of a wind turbine with each other using a Reach Stacker.

## Claims

1. Method for mounting of at least two components (30, 40) of a wind turbine with each other in the process of building up a wind turbine
- wherein the first component (30) is first positioned, oriented and/or arranged relatively to the second component (40) by a Reach Stacker (10) and
- wherein then the at least two components (30, 40) are mounted with each other, wherein the first component is a rotor blade (30) and the second component is a hub (40) of the wind turbine.

2. Method according to claim 1, wherein the Reach Stacker (10) comprises a telescopic arm (15) with a substantially transverse and pivotable boom (18).

3. Method according to claim 2, wherein at least two float arms, wires, ropes and/or bands (23, 27) are attached to the boom (18) and the rotor blade (30) is arranged in a substantially horizontal orientation on the float arms, wires, ropes and/or bands (23, 27).

4. Method according to any one of the preceeding claims, wherein the rotor blade (30) is positioned, oriented and/or arranged in such a way relatively to the hub (40) by the Reach Stacker (10) that fastening means (31) of the rotor blade (30) and fastening means (42) of the hub (40) are arranged oppositely.

5. Method according to claim 4, wherein the boom (18) comprises at least one adjustable boom element (19, 20) and wherein the boom element (19, 20) of the boom (18) of the Reach Stacker (10) is adjusted substantially horizontally in such a way that the fastening means (31) of the rotor blade (30) and the fastening means (42) of the hub (40) interdigitate.

6. Use of a Reach Stacker (10) for mounting of at least two components (30, 40) of a wind turbine with each other in the process of building up a wind turbine
- wherein the first component (30) is first positioned, oriented and/or arranged relatively to the second component (40) by the Reach Stacker (10) and
- wherein then the at least two components (30, 40) are mounted with each other, wherein the first component is a rotor blade (30) and the second component is a hub (40) of the wind turbine.

7. Use of the Reach Stacker (10) according to claim 6, wherein the Reach Stacker (10) comprises a telescopic arm (15) with a substantially transverse and pivotable boom (18).

8. Use of the Reach Stacker (10) according to claim 7, wherein at least two float arms, wires, ropes and/or bands (23, 27) are attached to the boom (18) and the rotor blade (30) is arranged in a substantially horizontal orientation on the float arms, wires, ropes and/or bands (23, 27).

9. Use of the Reach Stacker (10) according to any one of the preceeding claims, wherein the rotor blade (30) is positioned, oriented and/or arranged in such a way relatively to the hub (40) by the Reach Stacker (10) that fastening means (31) of the rotor blade (30) and fastening means (42) of the hub (40) are arranged oppositely.

10. Use of the Reach Stacker (10) according to claim 9, wherein the boom (18) comprises at least one adjustable boom element (19, 20) and wherein the boom element (19, 20) of the boom (18) of the Reach Stacker (10) is adjusted substantially horizontally in such a way that the fastening means (31) of the rotor blade (30) and the fastening means (42) of the hub (40) interdigitate.

## Patentansprüche

1. Verfahren zum Aneinandermontieren von mindestens zwei Komponenten (30, 40) einer Windturbine im Verlauf des Aufbaus einer Windturbine,
- wobei die erste Komponente (30) zunächst in Bezug auf die zweite Komponente (40) durch einen Greifstapler (10) positioniert, ausgerichtet und/ oder angeordnet wird und
- wobei dann die mindestens zwei Komponenten (30, 40) aneinander montiert werden, bei dem es sich bei der ersten Komponente um ein Rotorblatt (30) und bei der zweiten Komponente um eine Nabe (40) der Windturbine handelt.

2. Verfahren nach Anspruch 1, bei dem der Greifstapler (10) einen Teleskoparm (15) mit einer im Wesentlichen quer verlaufenden, drehbaren Traverse (18) umfasst.

3. Verfahren nach Anspruch 2, bei dem mindestens zwei Gestänge, Kabel, Seile und/ oder Gurte (23, 27) an der Traverse (18) befestigt sind und das Rotorblatt (30) in im Wesentlichen horizontaler Ausrichtung an den Gestängen, Kabeln, Seilen und/ oder Gurten (23, 27) angeordnet wird.

4. Verfahren nach einem der vorhergehenden Ansprüche, bei dem das Rotorblatt (30) von dem Greifstapler (10) in Bezug auf die Nabe (40) so positioniert, ausgerichtet und/ oder angeordnet wird, dass Befestigungsmittel (31) des Rotorblatts (30) und Befestigungsmittel (42) der Nabe (40) einander gegenüberliegend angeordnet sind.

5. Verfahren nach Anspruch 4, bei dem die Traverse (18) mindestens ein justierbares Traversenelement (19, 20) umfasst und das Traversenelement (19, 20) der Traverse (18) des Greifstaplers (10) im Wesentlichen horizontal so justiert wird, dass die Befestigungsmittel (31) des Rotorblatts (30) und die Befestigungsmittel (42) der Nabe (40) ineinandergreifen.

6. Verwendung eines Greifstaplers (10) zum Aneinandermontieren von mindestens zwei Komponenten (30, 40) einer Windturbine im Verlauf des Aufbaus einer Windturbine,
- wobei die erste Komponente (30) zunächst in Bezug auf die zweite Komponente (40) durch den Greifstapler (10) positioniert, ausgerichtet und/ oder angeordnet wird und
- wobei dann die mindestens zwei Komponenten (30, 40) aneinander montiert werden, wobei es sich bei der ersten Komponente um ein Rotorblatt (30) und bei der zweiten Komponente um eine Nabe (40) der Windturbine handelt.

7. Verwendung des Greifstaplers (10) nach Anspruch 6, wobei der Greifstapler (10) einen Teleskoparm (15) mit einer im Wesentlichen quer verlaufenden, drehbaren Traverse (18) umfasst.

8. Verwendung des Greifstaplers (10) nach Anspruch 7, wobei mindestens zwei Gestänge, Kabel, Seile und/ oder Gurte (23, 27) an der Traverse (18) befestigt sind und das Rotorblatt (30) in im Wesentlichen horizontaler Ausrichtung an den Gestängen, Kabeln, Seilen und/ oder Gurten (23, 27) angeordnet ist.

9. Verwendung des Greifstaplers (10) nach einem der vorhergehenden Ansprüche, wobei das Rotorblatt (30) von dem Greifstapler (10) in Bezug auf die Nabe (40) so positioniert, ausgerichtet und/ oder angeordnet wird, dass Befestigungsmittel (31) des Rotorblatts (30) und Befestigungsmittel (42) der Nabe (40) einander gegenüberliegend angeordnet sind.

10. Verwendung des Greifstaplers (10) nach Anspruch 9, bei dem die Traverse (18) mindestens ein justierbares Traversenelement (19, 20) umfasst und das Traversenelement (19, 20) der Traverse (18) des Greifstaplers (10) im Wesentlichen horizontal so justiert wird, dass die Befestigungsmittel (31) des Rotorblatts (30) und die Befestigungsmittel (42) der Nabe (40) ineinandergreifen.

## Revendications

1. Procédé de montage d'au moins deux composants (30, 40) d'une éolienne l'un avec l'autre dans le processus d'érection d'une éolienne
- dans lequel le premier composant (30) est positionné le premier, orienté et/ou agencé par rapport au deuxième composant (40) par un chariot gerbeur télescopique (10) et
- dans lequel ensuite les au moins deux composants (30, 40) sont montés l'un avec l'autre, dans lequel le premier composant est une pale (30) de rotor et le deuxième composant est un moyeu (40) de l'éolienne.

2. Procédé selon la revendication 1, dans lequel le chariot gerbeur télescopique (10) comprend un bras télescopique (15) avec une flèche (18) sensiblement transversale et pivotante.

3. Procédé selon la revendication 2, dans lequel au moins deux bras flottants, câbles, cordes et/ou bandes (23, 27) sont fixés à la flèche (18) et la pale (30) de rotor est agencée selon une orientation sensiblement horizontale sur les bras flottants, câbles, cordes et/ou bandes (23, 27).

4. Procédé selon l'une quelconque des revendications précédentes, dans lequel la pale (30) de rotor est positionnée, orientée et/ou agencée de telle façon par rapport au moyeu (40) par le chariot gerbeur télescopique (10) que des moyens de fixation (31) de la pale (30) de rotor et des moyens de fixation (42) du moyeu (40) sont agencés en opposition.

5. Procédé selon la revendication 4, dans lequel la flèche (18) comprend au moins un élément (19, 20) de flèche ajustable et dans lequel l'élément (19, 20) de flèche de la flèche (18) du chariot gerbeur télescopique (10) est ajusté sensiblement horizontalement de telle façon que les moyens de fixation (31) de la pale (30) de rotor et les moyens de fixation (42) du moyeu (40) sont interdigités.

6. Utilisation d'un chariot gerbeur télescopique (10) pour le montage d'au moins deux composants (30, 40) d'une éolienne l'un avec l'autre dans le processus d'érection d'une éolienne
- dans lequel le premier composant (30) est positionné le premier, orienté et/ou agencé par rapport au deuxième composant (40) par le chariot gerbeur télescopique (10) et
- dans lequel ensuite les au moins deux composants (30, 40) sont montés l'un avec l'autre, dans laquelle le premier composant est une pale (30) de rotor et le deuxième composant est un moyeu (40) de l'éolienne.

7. Utilisation du chariot gerbeur télescopique (10) selon la revendication 6, dans laquelle le chariot gerbeur télescopique (10) comprend un bras télescopique (15) avec une flèche (18) sensiblement transversale et pivotante.

8. Utilisation du chariot gerbeur télescopique (10) selon la revendication 7, dans laquelle au moins deux bras flottants, câbles, cordes et/ou bandes (23, 27) sont fixés à la flèche (18) et la pale (30) de rotor est agencée selon une orientation sensiblement horizontale sur les bras flottants, câbles, cordes et/ou bandes (23, 27).

9. Utilisation du chariot gerbeur télescopique (10) selon l'une quelconque des revendications précédentes, dans laquelle la pale (30) de rotor est positionnée, orientée et/ou agencée de telle façon par rapport au moyeu (40) par le chariot gerbeur télescopique (10) que des moyens de fixation (31) de la pale (30) de rotor et des moyens de fixation (42) du moyeu (40) sont agencés en opposition.

10. Utilisation du chariot gerbeur télescopique (10) selon la revendication 9, dans laquelle la flèche (18) comprend au moins un élément (19, 20) de flèche ajustable et dans laquelle l'élément (19, 20) de flèche de la flèche (18) du chariot gerbeur télescopique (10) est ajusté sensiblement horizontalement de telle façon que les moyens de fixation (31) de la pale (30) de rotor et les moyens de fixation (42) du moyeu (40) sont interdigités.
